# EUROPÄISCHE PATENTSCHRIFT

(11) **EP 1 623 544 B1**
(45) Veröffentlichungstag und Bekanntmachung des Hinweises auf die Patenterteilung: **28.05.2008**
(21) Anmeldenummer: 04741470.1
(22) Anmeldetag: 16.04.2004
(51) Int. Cl.: H04L 25/02, H04L 7/06, H03H 7/00, H04L 5/14, B60R 21/01, G01P 15/00

(54) **Verfahren und Vorrichtungen zur Übertragung von Daten auf einer Datenleitung zwischen einem zentralen Steuergerät und mindestens einer Datenverarbeitungsschnittstelle mindestens eines dezentralen Datenverarbeitungsgeräts**
Method and devices for transmitting data on a data line between a central control unit and at least one data processing unit interface of at least one decentralized data processing unit
Procédé et dispositif de transmission de données sur une ligne de données entre un appareil central de commande et au moins une interface appareil de traitement de données d'au moins un appareil local de traitement de données

(30) Priorität: 14.05.2003 DE 10321678
(43) Veröffentlichungstag der Anmeldung: 08.02.2006
(73) Patentinhaber: Continental Automotive GmbH, 30165 Hannover (DE)
(72) Erfinder: GLASER, Telmo, 93053 Regensburg (DE); SWART, Marten, 93083 Obertraubling (DE)
(86) Internationale Anmeldenummer: PCT/EP2004/050554
(87) Internationale Veröffentlichungsnummer: WO 2004/102909

(56) Entgegenhaltungen:
- EP-A- 0 644 679
- DE-A- 1 916 020
- DE-A- 19 609 290
- US-A- 4 907 222
- US-B1- 6 246 734

## Beschreibung

Die vorliegende Erfindung betrifft ein Verfahren zur Übertragung von Daten auf einer Datenleitung zwischen einem zentralen Steuergerät und mindestens einer Datenverarbeitungsgeräteschnittstelle mindestens eines dezentralen Datenverarbeitungsgeräts. Dazu gibt das zentrale Steuergerät zur Anforderung von Datenpaketen periodisch Synchronisationspulse über die Datenleitung an die Datenverarbeitungsgeräteschnittstelle aus, worauf das dezentrale Datenverarbeitungsgerät seine zur Übertragung anstehenden Daten als zumindest ein Datenpaket über die Datenverarbeitungsgeräteschnittstelle an das zentrale Steuergerät zurücksendet.

Ein solches Verfahren und dazu geeignete Vorrichtungen sind beispielsweise bekannt aus der deutschen Offenlegungsschrift DE 196 09 290 A1. Dort wird ein Sensormodul (11) beschrieben, das über eine Datenleitung (1a) mit einem zentralen Steuergerät (5) verbunden ist. Das Sensormodul (11) umfasst einen beschleunigungsempfindlichen Sensor und übermittelt periodisch alle 500 µs ein aus den Sensormesswerten des Sensors aufbereitetes codiertes Datenpaket strommoduliert an das Steuergerät (5), sobald es einen Synchronisationsspannungspuls auf der Leitung (1a) erkannt hat (beispielsweise dortige Spalte 1, Zeile 66 bis Spalte 2, Zeile 30, oder Spalte 4, Zeilen 55 bis 62).

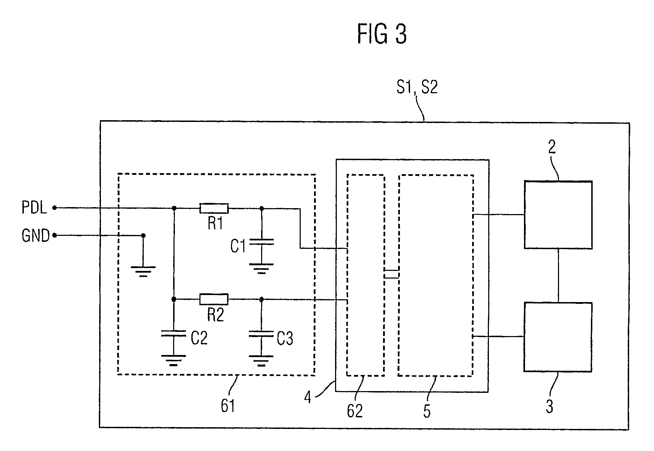

Figur 3 dieser Offenlegungsschrift zeigt die wichtigsten Bestandteile des Sensormoduls (11), den beschleunigungsempfindlichen Sensor (30) und Elemente zur Übermittlung der Sensormesswerte und zum Empfang des Synchronisationspulses des zentralen Steuergerätes (5). Diese Elemente werden im Allge meinen zusammengefasst als Schnittstelle des Sensormoduls oder kurz Sensorschnittstelle bezeichnet. Wie in der Figur 3 gezeigt sind dabei einzelne Elemente der Sensorschnittstelle Energiespeichermittel, beispielsweise das Filtermittel 31 oder der Kondensator C. In einer technischen Umsetzung eines Sensormoduls (11) entsprechend der Figur 3 sind darüber hinaus zumeist noch weitere solcher Energiespeichermittel in einer Sensorschnittstelle vorhanden.

Die Energiespeichermittel einer solchen Sensorschnittstelle werden durch einen Synchronisationspuls, beispielsweise einen Spannungspuls, elektrisch aufgeladen. Sollen nun Daten wie z. B. im vorliegenden Fall mittels modulierter Strompulse über dieselbe Sensorschnittstelle übertragen werden, so können die aufgeladenen Energiespeichermittel Einfluss auf das zu übertragende Signal nehmen. Beispielsweise kann dadurch ein gewünschter Stromhub nicht erreicht werden, wodurch es zu Fehlern in der Datenübertragung zum empfangenden zentralen Steuergerät kommen kann. Erkennt das zentrale Steuergerät diesen Übertragungsfehler, so kann das zentrale Steuergerät aus Sicherheitsgründen entscheiden, ein Insassenschutzmittel ggf. erst später auszulösen, sobald wieder sicher erkannte Sensorwerte vorliegen. Erkennt das zentrale Steuergerät den Übertragungsfehler nicht, so kann es im schlimmsten Fall zu einer unnötigen Auslösung eines Insassenschutzmittels, beispielsweise eines Fahrerairbags, kommen, wodurch unter Umständen Personen verletzt werden.

Das geschilderte Problem ergibt sich jedoch nicht nur bei einer Datenübertragung im Bereich des Insassenschutzes in Kraftfahrzeugen, sondern ergibt sich ganz allgemein bei jeder Art der Übertragung von Daten auf einer Datenleitung zwischen einem zentralen Steuergerät und einem dezentralen, d.h. örtlich davon entfernt angeordneten, Datenverarbeitungsgerät über eine Datenverarbeitungsgeräteschnittstelle.

Aufgabe der vorliegenden Erfindung ist es, eine Möglichkeit zur Übertragung von Daten auf einer Datenleitung zwischen einem zentralen Steuergerät und einem dezentralen Datenverarbeitungsgerät zu schaffen, wobei einer elektrischen Aufladung der zur Kommunikation benötigten Schnittstelle durch einen datenanfordernden Synchronisationspuls entgegengewirkt wird.

Diese Aufgabe wird gelöst durch ein Verfahren, das die Verfahrensmerkmale gemäß Patentanspruch 1 aufweist. Weiterhin wird die Aufgabe gelöst durch ein dezentrales Datenverarbeitungsgerät gemäß Anspruch 10 und eine Anordnung gemäß Anspruch 11.

Bei dem erfindungsgemäßen Verfahren zur Übertragung von Daten auf einer Datenleitung zwischen einem zentralen Steuergerät und einer Datenverarbeitungsgeräteschnittstelle eines dezentralen Datenverarbeitungsgeräts fordert das zentrale Steuergerät von dem dezentralen Datenverarbeitungsgerät Datenpakete durch die periodische Ausgabe von Synchronisationspulsen über die Datenleitung an. Das dezentrale Datenverarbeitungsgerät überträgt die angeforderten Daten über dieselbe Datenleitung als ein oder auch mehrere Datenpakete nach dem Synchronisationspuls über seine Datenverarbeitungsgeräteschnittstelle an das zentrale Steuergerät. Erfindungsgemäß wirkt das dezentrale Datenverarbeitungsgerät einer elektrischen Aufladung mindestens eines Energiespeichermittels seiner Datenverarbeitungsgeräteschnittstelle durch den Synchronisationspuls dadurch entgegen, dass das dezentrale Datenverarbeitungsgerät unmittelbar nach dem Einsetzen des Synchronisationspulses zu einer Synchronisationsstartzeit, aber noch vor der Übertragung eines ersten Datenpakets nach einer ersten Wartezeit, einen elektrischen Entladungspuls nach einer Entladungsstartzeit erzeugt.

Eine bevorzugte Anwendung des erfindungsgemäßen Verfahrens ist dabei der Bereich des Insassenschutzes in Kraftfahrzeugen, wie schon eingangs anhand der deutschen Offenlegungs schrift DE 196 09 290 A1 erläutert wurde, aber auch ganz allgemein besonders in solchen Bereichen, in denen eine sichere Datenübertragung von entscheidender Bedeutung ist. Bei einer Anwendung des erfindungsgemäßen Verfahrens im Bereich des Insassenschutzes handelt es sich bei dem zentralen Steuergerät vorzugsweise um ein zentral angeordnetes zentrales Steuergerät eines Insassenschutzsystems, bei dem dezentralen Datenverarbeitungsgerät und dessen Datenverarbeitungsgeräteschnittstelle vorzugsweise um eine an das zentrale Steuergerät angeschlossene dezentrale Sensoreinheit bzw. deren Sensorschnittstelle.

Wie ebenfalls eingangs erwähnt wird das erfindungsgemäße Verfahren vorzugsweise dann verwendet, wenn es sich bei einem Synchronisationspuls um einen Spannungspuls handelt, der die Datenverarbeitungsgeräteschnittstelle ggf. zu stark elektrisch auflädt, und die Datenpakete mittels modulierter Strompulse übertragen werden, die ggf. sehr leicht durch veränderte Aufladungsverhältnisse der Datenverarbeitungsgeräteschnittstelle beeinflusst werden.

Das Verfahren kommt insbesondere dann zu einem vorteilhaften Einsatz, wenn innerhalb der Datenverarbeitungsgeräteschnittstelle beispielsweise zumindest ein Kondensator als Energiespeichermittel eingesetzt wird, der während des Synchronisationspulses aufgeladen wird und während des Entladungspulses und der Datenübertragung entladen wird.

Da gerade bei einer strommodulierenden Datenverarbeitungsgeräteschnittstelle alle Schaltungselemente zur Ausgabe von Strompulsen schon für die Datenübertragung zur Verfügung stehen, handelt es sich bei dem Entladungspuls des dezentralen Datenverarbeitungsgeräts vorzugsweise ebenfalls um einen Strompuls, der auf die gleiche Weise erzeugt wird wie die Strompulse zur Datenübertragung.

Es ist weiterhin vorteilhaft für ein erfindungsgemäßes Verfahren, dass der Entladungspuls zu einer Entladungsendzeit endet, die jedoch noch vor Ablauf einer Wartezeit nach dem Synchronisationspuls, zu der eine erstmalige Ausgabe eines Datenpakets durch die Datenverarbeitungsgeräteschnittstelle durch das dezentrale Datenverarbeitungsgerät erfolgen soll. Auf diese Weise wird eine mögliche Störung der Datenkommunikation durch eine Doppelbenutzung der Datenverarbeitungsgeräteschnittstelle vermieden.

Eine vorteilhafte Art der Codierung eines Datenpakets wird in den Unteransprüchen 8 und 9 wiedergegeben.

Bisher war lediglich vom Anschluss eines dezentralen Datenverarbeitungsgeräts über die Datenleitung an das zentrale Steuergerät die Rede. Es ist natürlich auch möglich, mehrere dezentrale Datenverarbeitungsgeräte an eine Datenleitung anzuschließen. Dies bietet den besonderen Vorteil, dass im Gegensatz zu einer sogenannten Punkt zu Punkt Verbindung über einzelne Datenleitungen zu jedem einzelnen dezentralen Datenverarbeitungsgerät der Verkabelungsaufwand wesentlich geringer ist. Vorzugsweise wird bei jedem einzelnen angeschlossenen dezentralen Datenverarbeitungsgerät eine der bereits beschriebenen vorteilhaften Ausführungsformen des erfindungsgemäßen Verfahrens eingesetzt.

Die in den Unteransprüchen zum unabhängigen Verfahrensanspruch 1 angegebenen vorteilhaften Merkmale stellen vorteilhafte Weiterbildungen des erfindungsgemäßen Verfahrens sowohl kumuliert als auch in verschiedentlicher Kombination einzelner Merkmale dar.

Nachfolgend wird die Erfindung anhand von Ausführungsbeispielen erläutert. Es zeigen:
- Figur 1: ein Kraftfahrzeug (1) mit zwei Datenleitungen (PDL, PDL'), die ein erfindungsgemäßes zentrales Steuergerät (ECU) mit jeweils zwei erfindungsgemäßen Sensoreinheiten (S1, S2, S1', S2') verbindet,
- Figur 2: eine Anordnung, bestehend aus einem zentralen Steuergerät (ECU), dass sowohl über eine Masseleitung (GND) als auch über eine Daten-/Versorgungsleitung (PDL) mit zwei Sensoreinheiten (S1, S2) verbunden ist,
- Figur 3: den inneren Aufbau einer erfindungsgemäßen Sensoreinheit (S1, S2),
- Figur 4: eine schematische Darstellung der zeitlichen Abfolge von ersten und zweiten Datenpaketen (DP) einer ersten und/oder zweiten Sensoreinheit (S1, S2) während des Normalbetriebsmodus (NM), wobei die Datenpakete (DP) entweder nach einer ersten Wartezeit (t_{dly1}) oder nach einer zweiten Wartezeit (t_{dly2}) ausgesandt werden,
- Figur 5: eine schematische Auftragung des Stromhubs (I_{PDL} (S1,S2)) einer Sensoreinheit (S1, S2) für ein manchestercodiertes Null-Datenbit und ein manchestercodiertes Eins-Datenbit über die Zeit (t),
- Figur 6: eine schematische Auftragung eines erfindungsgemäßen, stromcodierten Datenpakets über die Zeit (t)

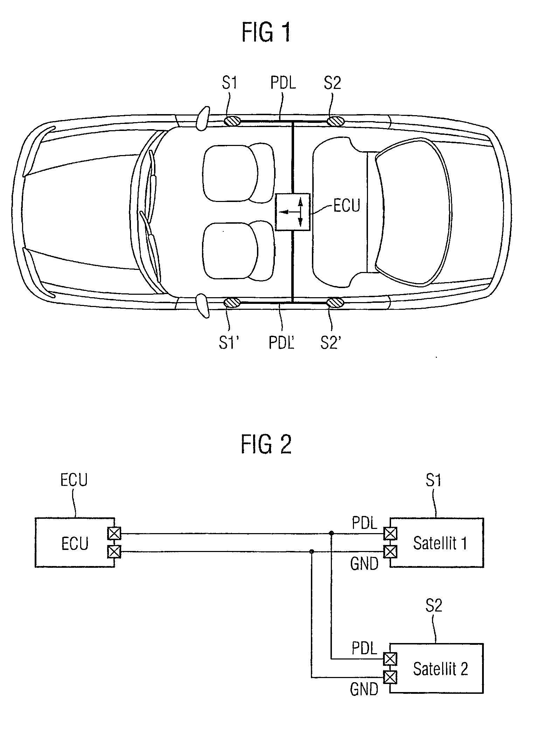

Figur 1 zeigt ein Kraftfahrzeug 1 mit einer erfindungsgemäßen Anordnung S1, PDL, S2, ECU zur Übertragung von Daten auf einer Datenleitung PDL zwischen einem zentralen Steuergerät ECU und zwei an die gemeinsame Datenleitung PDL angeschlossenen Sensoreinheiten S1 und S2. Weiterhin dargestellt sind in der Figur 1 eine weitere Datenleitung PDL' und weitere Sensoreinheiten S1` und S2', die über die Datenleitung PDL' ebenfalls mit dem zentralen Steuergerät ECU verbunden sind.

Auch Figur 2 zeigt ein zentrales Steuergerät ECU, dass über eine gemeinsame Datenleitung PDL mit einer ersten und einer zweiten Sensoreinheit S1 bzw. S2 verbunden ist.

Die gemeinsame Datenleitung PDL dient zum einen dazu, periodisch, beispielsweise alle 500 Mikrosekunden, Spannungspulse (Sync) an die Sensoreinheiten S1 und S2 auszugeben, wodurch das zentrale Steuergerät ECU Datenpakete DP von den Sensoreinheiten S1 bzw. S2 anfordert. Zum anderen schickt sowohl die erste Sensoreinheit S1 als auch die zweite Sensoreinheit S2 auf dieser gemeinsamen Datenleitung PDL Datenpakete DP in der Form von Strompulsen, die in einem Testbetriebsmodus Kenn- und Testdaten der Sensoreinheiten S1 bzw. S2 beinhalten und während des überwiegend vorliegenden Normalbetriebsmodus der beiden Sensoreinheiten S1 und S2 Sensormesswerte.

Ebenso dargestellt ist eine gemeinsame Masseleitung GND, die das Massepotenzial des zentralen Steuergerätes ECU zu allen angeschlossenen Satelliteneinheiten S1, S2 führt.

Figur 3 zeigt eine erfindungsgemäße Sensorvorrichtung S1 bzw. S2. Nachfolgend sollen die Merkmale der Sensoreinheit S1 bzw. S2 anhand einer ersten Sensoreinheit S1 beschrieben werden. Diese Merkmale gelten jedoch selbstverständlich auch für eine erfindungsgemäße zweite Sensoreinheit S2.

Die Sensoreinheit S1 weist einen Sensor 2 auf, beispielsweise einen Beschleunigungssensor 2, bestehend aus einem Halbleiterchip, der ein mikromechanisches Halbleiter - Sensorelement und auf dem selben Halbleiterchip integriert angeordnete signalverarbeitende Halbleiter - Elektronikkomponenten aufweist. Ein geeignetes mikromechanisches Sensorelement sind beispielsweise durch Ätzprozesse im Herstellungsablauf des Halbleiterchips freigelegte, in eine oder mehrere Sensierungsrichtungen bewegliche Massestrukturen, die zusammen mit statischen Chipteilen als Kapazität geschaltet sind. Je nach Richtung und Stärke einer einwirkenden Beschleunigung bewegen sich die Massestrukturen auf unterschiedliche Weise, was sich als Kapazitätsänderung elektrisch abgreifen lässt. Ein geeignetes Sensorelement ist jedoch auch ein Drucksensorelement, bei dem ein freigeätzter Hohlraum im Halbleiterchip durch eine druckdichte Membran aus verbliebenem Halbleitermaterial vom Umgebungsdruck der Atmosphäre druckdicht abgeschlossen wird. Die Halbleitermembran ist nachgiebig gegenüber dem einwirkenden äußeren Luftdruck und kann in gleicher Weise wie bei Beschleunigungsmesszellen zusammen mit starren Chipteilen als Kapazität beschaltet sein, so dass ein sich ändernder äußerer Luftdruck als eine sich ändernde Kapazität der Halbleitermembran im Vergleich zum übrigen Sensorchip gemessen werden kann. Ebenso sind natürlich andere Sensierungsprinzipien und Sensorstrukturen verwendbar, beispielsweise mechanische Beschleunigungsschalter, piezoresistive Druck- oder Beschleunigungssensoren, Drehratensensoren, Kurzschlussschalter oder auch Temperatursensoren, die beispielsweise eine Temperaturerhöhung in einem Hohlraum erfassen können, der während eines Unfallvorgangs komprimiert wird, beispielsweise das Innenvolumen einer Fahrzeugtür. Ebenso bekannt sind außerdem beispielsweise thermische Beschleunigungssensoren der Firma MEMSIC (http://www.memsic.com/memsic/), bei denen Beschleunigungen dadurch erfasst werden, dass erhitzte Luft innerhalb des Sensors durch einwirkende Beschleunigungen näher bzw. weiter zu Temperatursensoren bewegt wird, die eine entsprechende Temperaturveränderung feststellen können.

Weiterhin in der Figur 3 dargestellt ist ein Speicher 3, in dem Sensorkenndaten gespeichert sind, beispielsweise eine Identifikationsnummer der Sensoreinheit S1, deren Entwicklungsstand oder auch Kalibrierdaten, beispielsweise Umrechnungsformeln des Messbereiches oder ähnliches.

Weiterhin zeigt die Figur 3 eine Sensorsteuereinheit 4, die sowohl eine Sensorrecheneinheit 5 als auch eine Sensorschnittstelle 61, 62 aufweist.

Die Sensorrecheneinheit 5 kann dabei eine anwendungsspezifische integrierte Schaltung, ein sog. ASIC 5, sein, aber auch ein durch Software gesteuerter Mikrocontroller 5.

Bei der in der Figur 3 dargestellten Sensorschnittstelle 61, 62 ist ein erster Teil 61 der Sensorschnittstelle 61, 62 in Form einer diskreten Elektronikschaltung aus Widerständen R1, R2 und Kondensatoren C1, C2, C3 aufgebaut, wohingegen ein zweiter Teil 62 innerhalb eines integrierten Bausteins der Sensorsteuereinheit 4 mit der Sensorrecheneinheit 5 integriert ist. Genauso gut könnte jedoch die gesamte Sensorschnittstelle 61, 62 diskret auf einer Platine aufgebaut sein oder umgekehrt gesamt innerhalb eines Bausteins in der Sensorsteuereinheit 4 integriert sein. Dies betrifft übrigens auch den Sensor 2, der, anders als dargestellt, ebenso gut innerhalb der Sensorsteuereinheit 4 auf einem gemeinsamen Chip, ggf. sogar mit allen anderen Funktionseinheiten der Sensoreinheit S1 integriert sein kann.

An der Datenleitung PDL liegt eine Versorgungsspannung an, die durch das zentrale Steuergerät ECU ausgegeben wird. Au-ßerdem gibt das zentrale Steuergerät ECU über die Datenleitung PDL zur Anforderung von Datenpaketen DP von der Sensoreinheit S1 periodisch Synchronisationspulse Sync mittels Spannungsmodulation aus. Diese werden von der Sensorschnittstelle 61, 62 in dem Leitungszweig erkannt.

Die Sensoreinheit S1 übermittelt daraufhin Datenpakete DP auf der Datenleitung PDL, jedoch nicht in Form von Spannungspulsen, sondern in Form von Strompulsen. Dazu nimmt die Sensorrecheneinheit 5 Sensormesswerte des Sensors 2 auf, beispielsweise analoge Beschleunigungsmesswerte, wandelt das analoge Sensorsignal in ein digitales Signal um und codiert den digitalen Sensormesswert in einer Auflösung, die ihm sowohl durch die Struktur des Sensors, als auch durch Messbereichseinstellungen vorgegeben werden, die üblicherweise im Speicher 2 hinterlegt sind. Außerdem fügt die Recheneinheit 5 den auf diese Weise erzeugten Datenbits DB noch ein Paritätsbit PB hinzu , so dass es einer Empfängereinheit möglich ist, zumindest einfache Bitfehler bei der Datenübertragung zu erkennen.

Die elektrische Dimensionierung der elektrischen Schaltelemente des ersten Teils 61 der Sensorschnittstelle 61, 62 stellt einen Kompromiss zwischen drei wesentlichen Anforderungen an die Sensorschnittstelle dar. Zum einen muss eine gewollte Filterfunktion zur Glättung der Versorgungsspannung der Sensoreinheit S1 durch die Sensorschnittstelle 61, 62 sichergestellt sein, damit die Datenkommunikation beispielsweise nicht dadurch gestört wird, dass hochfrequente Störpulse auf der Datenleitung von der Sensoreinheit S1 fälschlicherweise als Synchronisationspulse Sync erkannt werden. Zweitens muss dabei dennoch die Erkennbarkeit des hochfrequenten Synchronisationspulses Sync für die Sensoreinheit S1 gewährleistet bleiben. Schließlich muss außerdem die Übertragungscharakteristik der Sensorschnittstelle 61, 62 bestmöglich für die gewünschte Datenkommunikation zwischen der dezentralen Sensoreinheit S1 und dem zentralen Steuergerät ECU geeignet sein.

Im Ausführungsbeispiel sollen stromcodierte Datenbits flankengesteuert und mit einer Bitdauer von 8 µs übertragen werden. Der dabei gewünschte Stromhub soll zwischen 20 bis 30 mA über dem Ruhestromverbrauch der dezentralen Sensoreinheit von 5 bis 8 mA liegen. Ein typischer Synchronisationspuls erreicht eine Spannung zwischen 20 bis 24 V, wohingegen die Spannungsversorgung der dezentralen Sensoreinheit ohne Synchronisationspuls Sync zwischen 6,5 und 12 V liegt. Ein Synchronisationspuls dauert zwischen 31 bis 33 µs. Für solche Datenbits und solche Synchronisationspulse ergeben sich vorteilhafte Werte zur Dimensionierung der Widerstände R1 und R2 von 47 und 220 Ω und für die Kondensatoren C1, C2 und C3 vorteilhafte Kapazitätswerte von 22 nF, 2,2 nF und 1 nF.

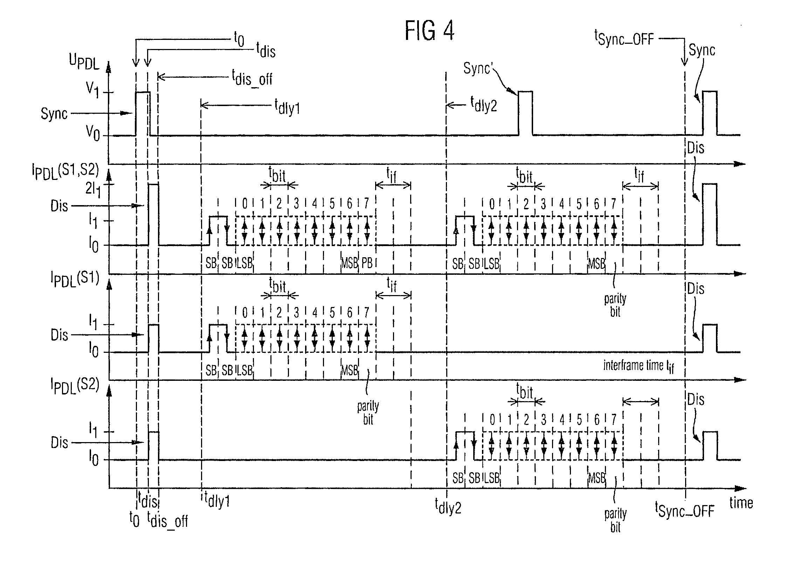

Figur 4 zeigt, jeweils über die gleiche Zeitachse aufgetragen, im obersten Diagramms eine Abfolge von zwei periodischen Synchronisationspulsen Sync und einen falschen Synchronisationspuls Sync'. Im zweiten Diagramm von oben ist hochwertig der Strom I_{PDL}(S1, S2) aufgetragen, der erzeugt wird, wenn zwei Sensoreinheiten S1 und S2 an eine Datenleitung PDL angeschlossen sind, wie bereits in Figur 2 dargestellt. Nach einer ersten Wartezeit t_{dly1} nach Einsetzen des Synchronisationspulses Sync wird, jeweils beginnend mit den zwei Startbits SB, das Datenpaket DP der ersten Sensoreinheit S1 ausgegeben, nach einer zweiten Wartezeit t_{dly2} das Datenpaket DP der zweiten Sensoreinheit S2. Der beispielsweise durch eine elektromagnetische Störung auf die gemeinsame Datenleitung PDL induzierte falsche Synchronisationspuls Sync' verursacht weder eine Übertragung eines Datenpaketes DP von der Sensoreinheit S1 noch von der Sensoreinheit S2, da die Signalausgabe beider bis zum Ablauf einer Sperrzeit t_{Sync_off} nach dem zuletzt erkannten gültigen Synchronisationspuls Sync gesperrt ist.

Um beispielsweise einer ungewollten Aufladung des Eingangsnetzwerks R1, C1, R2, C2, C3 des ersten Teils 61 der Sensorschnittstelle 61, 62 entgegenzuwirken, die durch den Synchronisationspuls Sync verursacht wird, erfolgt nach einer Entladungssperrzeit t_{dis} ein kurzer Entladepuls Dis durch beide Sensoreinheiten S1 und S2 mit einer doppelten Stromamplitude eines Datenbits DB. Das dritte und das vierte Diagramm von oben zeigt den Stromsignalhub I_{PDL}(S1) und I_{PDL}(S2) der durch nur eine Sensoreinheit S1 bzw. S2 hervorgerufen wird, wobei die Datenausgabe der ersten Sensoreinheit S1 nach der ersten Sperrzeit t_{dly1} erfolgt, jedoch die Datenausgabe der zweiten Sensoreinheit nach der zweiten Sperrzeit t_{dly2} erfolgt. Entsprechend ist in beiden Fällen auch lediglich ein Entladungspuls Dis ausreichend, der lediglich eine Stromamplitude eines Datenbits DB aufweist.

Für die bereits weiter oben beschriebenen Zeiten und Ströme eines Datenbits DB, für die Zeiten und Spannungen eines Synchronisationspulses Sync und die genannten Größen von Widerständen und Kapazitäten des ersten Teils 61 der Sensor schnittstelle 61, 62 ist ein günstiger Synchronisationsstartzeitpunkt t_{DIS} 34 µs nach dem Einsetzen des Synchronisationspulses Sync und seine optimale Dauer 32 µs.

Im Folgenden wird die binäre Codierung eines Datenpakets näher beschrieben:

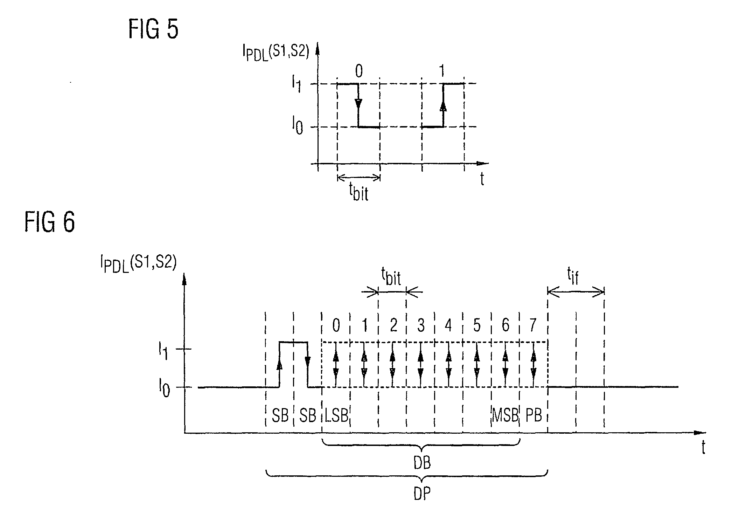

Figur 5 zeigt die Codierungsart eines logischen Null-Zustandes und eines logischen Eins-Zustandes eines Datenbits eines Datenpakets DP der Sensoreinheit S1. Auf der Hochwertachse des Diagramms ist der Stromhub I_{PDL} (S1, S2) dargestellt, der durch die Datenbits eines Datenpakets DP hervorgerufen wird. Bei der vorliegend verwendeten Art der Codierung der Datenbits DB handelt es sich um eine Flankencodierung in der einer möglichen Ausprägung eines Manchestercodes. Der gezeigte Manchestercode stellt ein Null-Bit durch eine fallende Flanke inmitten einer für ein Bit reservierten Bitzeit t_{Bit} dar und entsprechend umgekehrt ein Eins-Bit durch eine steigende Flanke des Stromsignals. Um entsprechend eine Abfolge von Null-Bits oder eine Abfolge von Eins-Bits darzustellen, muss mindestens eine Taktrate zur Datenübertragung vorgesehen werden, deren Periodendauer die Zeitdauer t_{Bit} eines Bits beträgt. Bei einer Bitdauer t_{Bit} von 8 Mikrosekunden ist daher eine Taktrate von mindestens 125 kHz erforderlich. Es ist jedoch auch ein Vielfaches von 125 kHz Taktrate möglich, beispielsweise die häufig genutzte Taktrate innerhalb von Mikrokontrollern von 8 MHz.

Selbstverständlich sind auch andere flankencodierte Datencodierungen möglich, aber auch beliebige andere binäre Datencodierungen, beispielsweise die bekannte NRZ (No Return to Zero) - Codierung.

Figur 6 zeigt ein vollständiges Datenpaket DP in einem Strom-Zeit-Diagramm. Die ersten beiden Bits eines Datenpakets DP sind zwei Startbits SB gemäß einer logischen Abfolge 1 0. Die anschließenden sieben Datenbits von Bit 0 bis Bit 6 stellen die binär codierten Sensormesswerte dar, wobei das erste übertragene Bit das niederwertigste Bit LSB und das letzte übertragende Datenbit 6 das höchstwertige Bit MSB ist. Diese Datenstruktur ist insoweit sowohl im Normalbetriebsmodus NM als auch im Testbetriebsmodus TM gleich.

## Patentansprüche

1. Verfahren zur Übertragung von Daten auf einer Datenleitung (PDL) zwischen einem zentralen Steuergerät (ECU) und mindestens einer Datenverarbeitungsgeräteschnittstelle (61, 62) mindestens eines dezentralen Datenverarbeitungsgeräts (S₁, S2), bei dem das zentrale Steuergerät (ECU) zur Anforderung von Datenpaketen (DP) periodisch Synchronisationspulse (Sync) über die Datenleitung (PDL) an die Datenverarbeitungsgeräteschnittstelle (61, 62) ausgibt und das dezentrale Datenverarbeitungsgerät (S1, S2) ihre zur Übertragung anstehenden Daten als zumindest ein Datenpaket (DP) nach dem Synchronisationspuls (Sync) über die Datenverarbeitungsgeräteschnittstelle (61, 62) an das zentrale Steuergerät (ECU) sendet, **dadurch gekennzeichnet, dass** das dezentrale Datenverarbeitungsgerät (S1, S2) die durch den Synchronisationspuls (Sync) elektrisch aufgeladene Datenverarbeitungsgeräteschnittstelle (61, 62) vor der Übertragung eines ersten Datenpakets (DP) durch die Ausgabe eines Entladungspulses (Dis) entlädt.

2. Verfahren nach Anspruch 1, **dadurch gekennzeichnet, dass** das dezentrale Datenverarbeitungsgerät (S1, S2) eine Sensoreinheit (S1, S2) ist, die Datenverarbeitungsgeräteschnittstelle (61, 62) eine Sensorschnittstelle ist und die übertragenen Datenpakete Sensormesswerte beinhalten.

3. Verfahren nach Anspruch 1 oder 2, **dadurch gekennzeichnet, dass** der Synchronisationspuls (Sync) als Spannungspuls ausgegeben wird.

4. Verfahren nach einem der vorherigen Ansprüche, **dadurch gekennzeichnet, dass** die Datenpakete (DP) des dezentralen Datenverarbeitungsgeräts (S1, S2) als Strompulse gesendet werden.

5. Verfahren nach einem der vorherigen Ansprüche, **dadurch gekennzeichnet, dass** der Entladungspuls (Dis) ein Strompuls ist.

6. Verfahren nach einem der vorherigen Ansprüche, **dadurch gekennzeichnet, dass** die Datenverarbeitungsgeräteschnittstelle (61, 62) zumindest einen Kondensator (C1, C2, C3) aufweist, der
- während eines Synchronisationspulses (Sync) durch diesen elektrisch aufgeladen wird; und
- während eines Entladungspulses (Dis) durch letzteren entladen wird.

7. Verfahren nach einem der vorherigen Ansprüche, **dadurch gekennzeichnet, dass** der Entladungspuls (Dis) zu einer Entladungsendzeit (t_{dis_off}) endet, die vor Ablauf einer ersten Wartezeit (t_{dly1}) liegt, ab der ein erstes Datenpaket (DP) durch das dezentrale Datenverarbeitungsgerät (S1, S2) gesendet wird.

8. Verfahren nach einem der Ansprüche 1 bis 7,
**dadurch gekennzeichnet, dass** die Datenbits der übermittelten Datenpakete (DP) flankencodiert werden, vorzugsweise manchestercodiert.

9. Verfahren nach einem der Ansprüche 1 bis 8,
**dadurch gekennzeichnet, dass**
ein Datenpaket (DP) folgendes Bitmuster aufweist:
- 7 Datenbits (DB), insbesondere zur Übermittlung von Sensormesswerten oder Sensorkennwerten;
- 2 Startbits (SB); und
- ein Paritätsbit (PB).

10. Dezentrales Datenverarbeitungsgerät (S1, S2) zum Einsatz in einem Verfahren zur Übertragung von Daten gemäß einem der Ansprüche 1 bis 9, das eine Datenverarbeitungsgeräteschnittstelle (61, 62) und eine Steuereinheit (4) aufweist, wobei durch die Datenverarbeitungsgeräteschnittstelle (61, 62) und/oder die Steuereinheit (4) ein Entladungspuls (Dis) ausgebbar ist.

11. Anordnung, die für den Ablauf eines Verfahrens zur Übertragung von Daten gemäß einem der Ansprüche 1 bis 9 einsetzbar ist und die sowohl ein dezentrales Datenverarbeitungsgerät (S1, S2) gemäß Anspruch 10 umfasst, als auch ein geeignetes zentrales Steuergerät (ECU).

## Claims

1. Method for transmitting data on a data line (PDL) between a central control unit (ECU) and at least one data processing unit interface (61, 62) of at least one decentralised data processing unit (S1, S2), in which in order to request data packets (DP), the central control unit (ECU) periodically outputs synchronisation pulses (Sync) over the data line (PDL) to the data processing unit interface (61, 62), and the decentralised data processing unit (S1, S2) transmits its data available for transmission as at least one data packet (DP), after the synchronisation pulse (Sync) via the data processing unit interfaces (61, 62) to the central control unit (ECU), **characterised in that** the decentralised data processing unit (S1 S2) discharges the data processing unit interfaces (61, 62) charged electrically by the synchronisation pulse (Sync) before the transmission of a first data packet (DP) by means of the output of a discharging pulse (Dis).

2. Method according to claim 1, **characterised in that**, the decentralised data processing unit (S1, S2) is a sensor unit (S1 S2), the data processing unit interface (61, 62) is a sensor interface and the transmitted data packets contain sensor measured values

3. Method according to claim 1 or 2, **characterised in that** the synchronisation pulse (Sync) is output as a voltage pulse.

4. Method according to one of the preceding claims, **characterised in that** the data packets (DP) of the decentralised data processing unit (S1, S2) are transmitted as current pulses.

5. Method according to one of the preceding claims, **characterised in that**, the discharging pulse (Dis) is a current pulse.

6. Method according to one of the preceding claims, **characterised in that**, the data processing unit interface (61, 62) comprises at least one capacitor (C1, C2, C3), which
- is charged electrically by this during a synchronisation pulse (Sync), and
- is discharged during a discharging pulse (Dis) by means of the latter

7. Method according to one of the preceding claims, **characterised in that**, the discharging pulse (Dis) ends at a discharging end time (t*_{dis_off}*),which lies before the expiry of a first waiting time (*t*_{*dly*1}), from which a first data packet (DP) is sent by means of the decentralised data processing unit (S1 S2).

8. Method according to one of the claims 1 to 7, **characterised in that**, the data bits of the transmitted data packets (DP) are edge-encoded, preferably Manchester-encoded.

9. Method according to one of claims 1 to 8,
**characterised in that**,
a data packet (DP) comprises the following bit pattern:
- 7 data bits (DB), in particular in order to transmit sensor measured values or sensor characteristic values;
- 2 start bits (SB); and
- a parity bit (PB).

10. Decentralised data processing device (S1, S2) for use in a method to transmit data according to one of claims 1 to 9, comprising a data processing unit interface (61, 62) and a control unit (4), with a discharging pulse (Dis) being able to be output by means of the data processing unit interface (61, 62) and/or the control unit (4).

11. Arrangement, which can be used for the operation of a method to transmit data according to one of the claims 1 to 9 and which comprises both a decentralised data processing device (S1, S2) according to claim 10 and also a suitable central control unit (ECU).

## Revendications

1. Procédé pour la transmission de données sur une ligne de données (PDL) entre un appareil de commande (ECU) et au moins une interface d'appareil de traitement de données (61, 62) d'au moins un appareil décentralisé de traitement de données (S1, S2), dans lequel l'appareil de commande (ECU) central édite pour la demande de paquets de données (DP) de façon périodique des impulsions de synchronisation (Sync) par la ligne de données (PDL) à destination d'une interface d'appareil de traitement de données (61, 62) et l'appareil décentralisé de traitement de données (S1, S2) envoie ses données disponibles pour la transmission sous la forme d'au moins un paquet de données (DP) après l'impulsion de synchronisation (Sync) par l'interface d'appareil de traitement de données (61, 62) à l'appareil de commande (ECU) central, **caractérisé en ce que** l'appareil décentralisé de traitement de données (S1, S2) décharge l'interface d'appareil de traitement de données (61, 62) chargée électriquement par l'impulsion de synchronisation (Sync) avant la transmission d'un premier paquet de données (DP) par l'édition d'une impulsion de décharge (Dis).

2. Procédé selon la revendication 1, **caractérisé en ce que** l'appareil décentralisé de traitement de données (S1, S2) est une unité capteur (S1, S2), l'interface d'appareil de traitement de données (61, 62) est une interface de capteur et les paquets de données transmis contiennent des valeurs mesurées de capteur.

3. Procédé selon la revendication 1 ou 2, **caractérisé en ce que** l'impulsion de synchronisation (Sync) est éditée sous forme d'impulsion de tension.

4. Procédé selon l'une quelconque des revendications précédentes, **caractérisé en ce que** les paquets de données (DP) de l'appareil décentralisé de traitement de données (S1, S2) sont envoyés sous forme d'impulsions de courant.

5. Procédé selon l'une quelconque des revendications précédentes, **caractérisé en ce que** l'impulsion de décharge (Dis) est une impulsion de courant.

6. Procédé selon l'une quelconque des revendications précédentes, **caractérisé en ce que** l'interface d'appareil de traitement de données (61, 62) présente au moins un condensateur (C1, C2, C3), qui
- est chargé électriquement pendant une impulsion de synchronisation (Sync) par celle-ci, et
- est déchargé pendant une impulsion de décharge (Dis) par cette dernière.

7. Procédé selon l'une quelconque des revendications précédentes, **caractérisé en ce que** l'impulsion de décharge (Dis) se termine à un temps final de décharge (t_{dis_off}) qui se situe avant l'expiration d'un premier temps d'attente (t_{dly1}), à partir duquel un premier paquet de données (DP) est envoyé par l'appareil décentralisé de traitement de données (S1, S2).

8. Procédé selon l'une quelconque des revendications 1 à 7, **caractérisé en ce que** les bits de données des paquets de données (DP) transmis sont codés au niveau des flancs, de préférence codés avec un code de Manchester.

9. Procédé selon l'une quelconque des revendications 1 à 8, **caractérisé en ce que**
un paquet de données (DP) présente le modèle de bit suivant:
- 7 bits de données (DB), en particulier pour la transmission de valeurs mesurées de capteur ou de valeurs caractéristiques du capteur ;
- 2 bits de démarrage (SB) ; et
- un bit de parité (PB).

10. Appareil décentralisé de traitement de données (S1, S2) pour l'utilisation dans un procédé pour la transmission de données selon l'une quelconque des revendications 1 à 9, qui présente une interface d'appareil de traitement de données (61, 62) et une unité de commande (4), une impulsion de décharge (Dis) pouvant être éditée par l'interface d'appareil de traitement de données (61, 62) et/ou l'unité de commande (4).

11. Agencement, qui peut être utilisé pour le déroulement d'un procédé pour la transmission de données selon l'une quelconque des revendications 1 à 9 et qui comporte aussi bien un appareil décentralisé de traitement de données (S1, S2) selon la revendication 10 qu'un appareil de commande (ECU) central approprié.
